# EUROPEAN PATENT APPLICATION

(11) **EP 2 012 230 A1**
(43) Date of publication of application: **07.01.2009**
(21) Application number: 08157341.2
(22) Date of filing: 30.05.2008
(51) Int. Cl.: G06F 9/445

(54) **Partitioning compression-based firmware over the air**

(30) Priority: 05.07.2007 US 773918
(71) Applicant: Samsung Electronics Co., Ltd., Suwon-si, Gyeonggi-Do (KR)
(72) Inventor: Peddireddy, Sudheer Kumar, Gyeonggi-do (KR); Budhati, Vani, Gyeonggi-do (KR)
(74) Representative: Harrison Goddard Foote

(57) **Abstract**

Computer readable medium, a system and a method for providing an image for use in a mobile device are provided. Object files are selected that include at least some code and some data for use by the mobile device. Components are generated from the object files. Whether a component is larger than a logical block is determined. The component is partitioned into modules in response to determining that the component is larger than the logical block. Unique addresses are established for components and any modules. A memory layout is generated including the unique addresses. Components and any modules are loaded at corresponding unique addresses to provide the image.

## Description

### BACKGROUND

Mobile devices contain software in the form of executable instructions and non-executable data that are stored in a memory. The software provides mobile devices with the ability to perform various functions, such as communicating via a wireless network, handling call features such as call waiting and call forwarding, and maintaining calendars and address books, for example.

However, once an end user has a mobile device, providing additional software or making corrections to the software already installed on the mobile device is difficult. To address this problem, firmware over the air (FOTA) was developed to enable a service provider to send or provide software updates over a wireless network to a mobile device. Such updates may provide additional functionality to software already existing on the mobile device or may provide bug fixes to address problems with the existing software. However, while an update process such as FOTA presents a way to send software to a mobile device, using such an update process is not without problems.

### SUMMARY

In one embodiment computer readable medium is provided containing software instruction operable when executed for providing an image for use in a mobile device. Object files are selected that include at least some code and some data for use by the mobile device. Components are generated from the object files. Whether a component is larger than a logical block is determined. The component is partitioned into modules in response to determining that the component is larger than the logical block. A unique address is established for each component and each module. A memory layout is generated including each unique address. Each component and each module is loaded at its corresponding unique address to provide the image.

In another embodiment, a system for providing an image for use in a mobile device is provided. The system includes an image creation system and a mobile device. The image creation system includes a processor. The mobile device includes a processor and a FOTA engine. The image creation system selects object files that include at least some code and some data for use by the mobile device. The image creation system also generates components from the object files, and determines whether a component is larger than a logical block. The image creation system also partitions the component into modules in response to determining that the component is larger than the logical block. The FOTA engine establishes a unique address for each component and each module, generates a memory layout including each unique address, and loads each component and each module at its corresponding unique address to provide the image.

In yet another embodiment, a method for updating an image for use in a mobile device is provided. Object files are selected that include at least some code and some data for use by the mobile device. Components are generated from the object files. Whether a component is larger than an allocated memory space in a memory layout is determined based on original object files. The component is partitioned into modules in response to determining that the component is larger than the allocated memory space. A delta is created between the object files and the original object files. At least one of an updated component and an updated module is generated from the delta and an original component. A unique address is established for each updated component and each updated module. An updated memory layout is generated including each unique address. Each updated component and each updated module is loaded at its corresponding unique address to provide an updated image.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Fig. 1 shows a system for providing an image for use in a mobile device according to embodiments of the present disclosure.
Figs. 2A-2D show various embodiments of memory blocks containing an image according to embodiments of the present disclosure.
Fig. 3 shows a memory layout according to embodiments of the present disclosure.
Figs. 4A-4D show various embodiments of memory blocks containing an image according to embodiments of the present disclosure.
Fig. 5 shows a flow chart of a method for providing an image for use in a mobile device according to embodiments of the present disclosure.
Fig. 6 shows a flow chart of a method for updating an image for use in a mobile device according to embodiments of the present disclosure.
Fig. 7 shows an illustrative wireless communications system.
Fig. 8 shows a block diagram of an illustrative mobile device.
Fig. 9 shows a diagram of an illustrative software configuration for a mobile device.
Fig. 10 shows block diagram of a typical, general-purpose computer system suitable for implementing one or more embodiments disclosed herein.

### DETAILED DESCRIPTION OF THE PREFERRED EMBODIMENTS

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Methods and systems for FOTA providing a compressed image for use in a mobile device are provided. In some embodiments, when a compressed component to be FOTA provided to a mobile device is generated, the size of the compressed component is compared to the size of a logical block, which is typically the minimal amount of memory that can be written to a flash memory. Because each compressed component that is larger than a logical block requires multiple writes to be stored and multiple reads to be retrieved, such a compressed component is partitioned into smaller modules. Fewer reads and fewer writes provide the user of the mobile device with faster FOTA update times and quicker access to compressed components and modules. Compressed components and modules are each loaded at unique addresses, and a compression header is generated to include each unique address. The compression header can be used by the mobile device to locate, retrieve, decompress, and execute any compressed component or module.

In some embodiments, the size of a new compressed component is compared to the allocated memory space for the old compressed component as specified by the compression header. If the new compressed component is too large to fit in the allocated memory space, the allocated memory space is not wasted by simply storing the entire compressed component elsewhere. Instead, the new compressed component is partitioned into modules, such that at least one of the resulting modules can be stored in the allocated memory space for the old compressed component. Instead of spending significant time FOTA sending all of the new compressed component, only the portions of the new compressed component that differ from the old compressed component are FOTA sent to the mobile device, thereby saving FOTA updating time. FOTA updated modules are generated in the mobile device based on the old compressed component and the changes to the old compressed component that were FOTA sent to the mobile device. The updated modules are loaded at unique addresses, some of which may be in the allocated memory space for the old compressed component. A compression header is generated to include the unique addresses. The compression header can be used by the mobile device to locate, retrieve, decompress, and execute any compressed component or module.

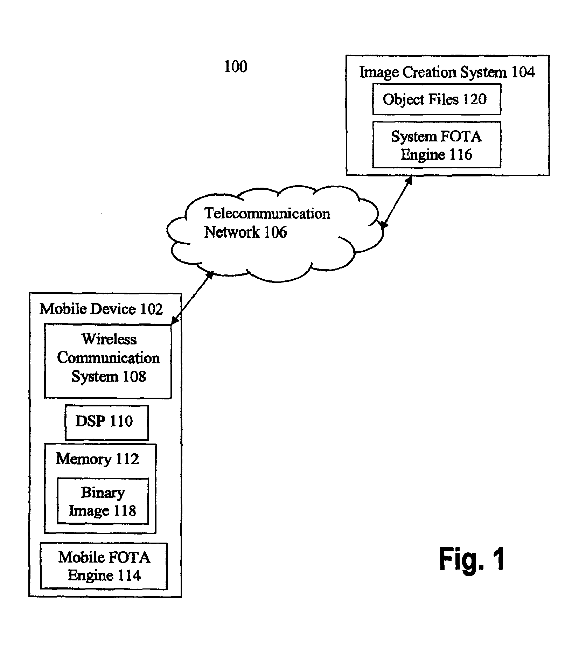

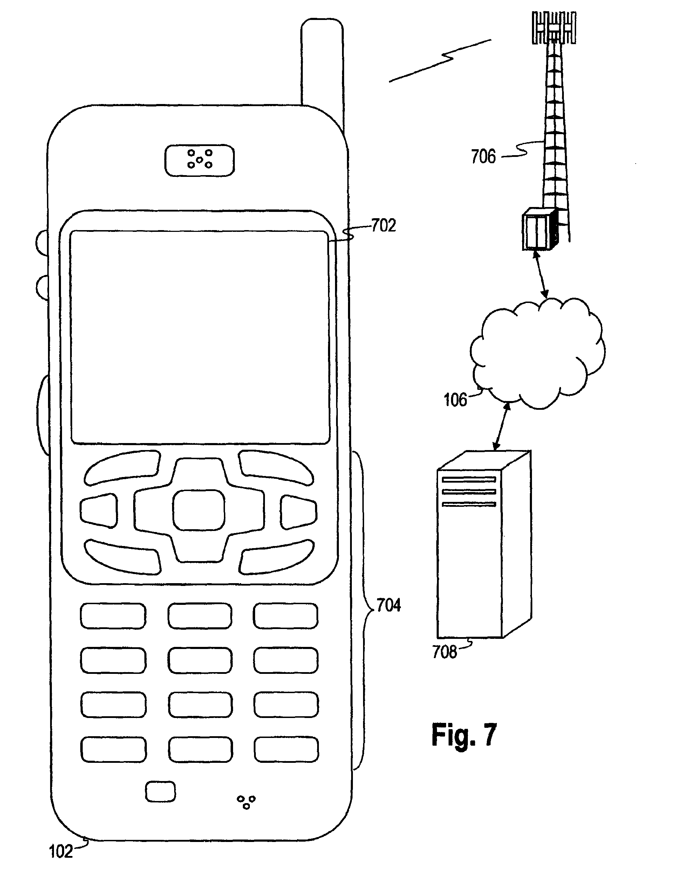

Fig. 1 depicts a system 100 for providing an image for use in a mobile device according to embodiments of the present disclosure. The system 100 includes a mobile device 102, which is described in more detail below with reference to Figs. 7-9, an image creation system 104, and a telecommunication network 106, by which the mobile device 102 and the image creation system 104 communicate with each other. The system 100 shows only one mobile device, one image creation system, and one telecommunication network for the purposes of an illustrative example, but the system 100 may include any number of mobile devices, image creation systems, and telecommunication networks.

The telecommunication network 106 may be a wireless telecommunication network, a public switch telephone network, an internet, or other networks, or combinations thereof. The telecommunication network 106 may be any type of network, including centralized and ad hoc networks, and may use any type of network technology, including Code Division Multiple Access (CDMA), Global System for Mobile communication (GSM), Orthogonal Frequency Division Multiplexing (OFDM), or similar communications technologies. In the present example, the telecommunication network 106 is a packet-based network, but it is understood that the present disclosure applies to any type of transmission.

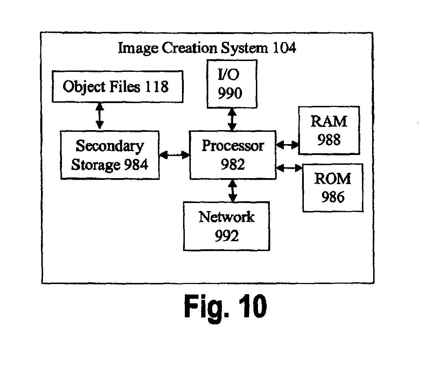

As will be described below in greater detail in Fig. 10, the image creation system 104 provides functionality to provide an image containing executable instructions and/or data. The image is transferred via the telecommunication network 106 to the mobile device 102. The mobile device 102 can use the image to provide functionality to a user and communicate with other devices via the telecommunication network 106. The image may contain various combinations of functionality and data. The image creation system 104 may update the image with additional features and bug fixes.

The mobile device 102 includes a wireless communication system 108 that the mobile device 102 uses to communicate with the telecommunications network 106. The mobile device 102 also includes a digital signal processor (DSP) 110, a memory 112, and a mobile FOTA engine 114 that are used to provide an image for use by the mobile device 102. The image creation system 104 may use a system FOTA engine 116 to prepare binary images sent to the mobile device 102. The image creation system 104 may use the system FOTA engine 116 to select object files, partition some object files into modules, generate components from the object files and any modules, and transfer the components and any modules to the mobile device 102. The mobile device 102 can use the DSP 110 to execute instructions in the image. The mobile device 102 can be any mobile device, including cellular phones, personal digital assistants, and laptop computers. An operating system may be used by the DSP 110 to control the mobile device 102 and provide a user interface by which a user of the mobile device 102 can access and utilize various functions.

The memory 112 of the mobile device 102 includes a binary image 118 of the executable instructions and data contained within the mobile device 102, although not all instructions and data in the mobile device 102 may be included in the binary image 118. In the present example, the binary image 118 is a monolithic image that contains the instructions and data in a static relationship that is created prior to being transferred to the mobile device 102. The binary image 118 is initially created by the image creation system 104 based on object files 120. The term "file" may represent any type of object, including text files, script files, or code in source, assembly, or other coding or language. A software program is generally written using a high level language (i.e., source code) and converted into machine readable language (i.e., object code) that is stored in files. The image creation system 104 examines the machine language code in the object files 120 to identify similarities between various pieces of code and then, unless otherwise directed, builds components based on those similarities. A component may contain a single module or a collection of modules, where a module can be a portion of a component that may be a relocatable object file. The component may be instructions to operate particular features on the mobile device 102, such as an address book.

The mobile FOTA engine 114 can include a compression component that assists in the compressing of the binary image 118 received from the image creation system 104, which enables the mobile FOTA engine 114 to minimize the amount of the memory 112 required to store the binary image 118 in the mobile device 102. Because the user of the mobile device 102 may store data such as voice messages, text messages, pictures, e-mails, and contacts in the memory 112, minimizing the amount of the memory 112 required to store the binary image 118 provides more available memory for the user.

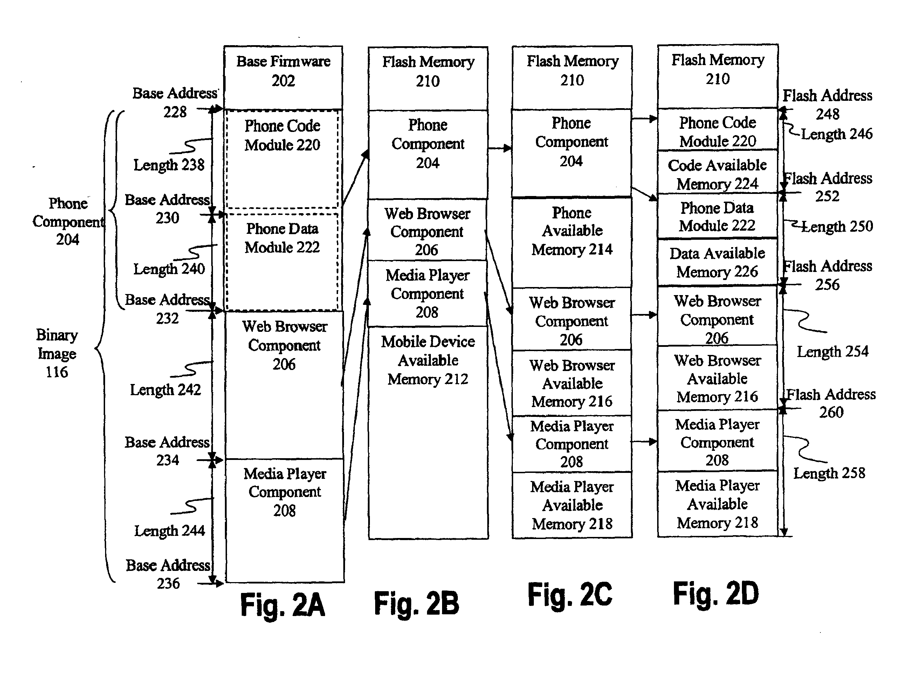

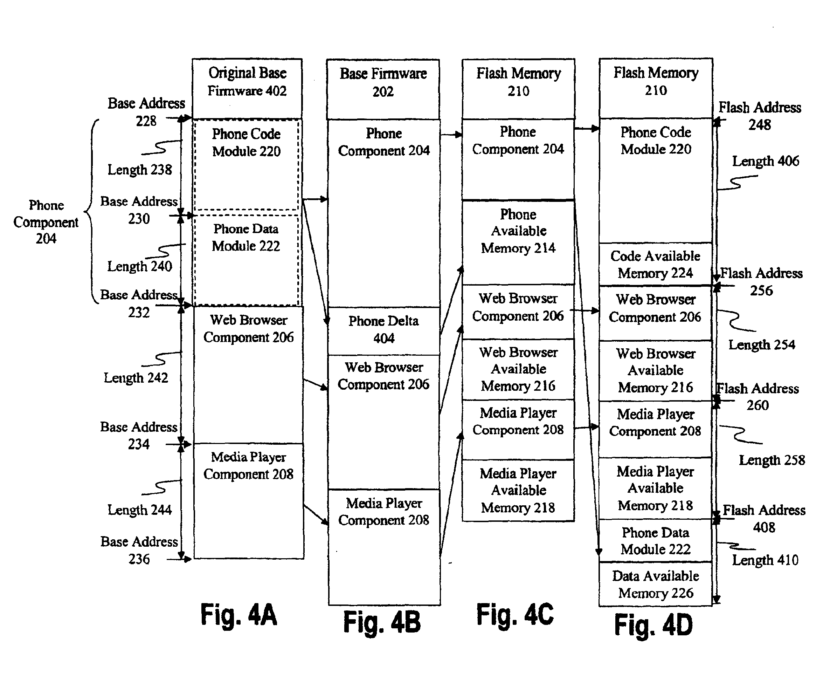

The use of the binary image 118 creates a number of problems when updating the mobile device 102. The problems often stem from image updates that occur when the binary image 118 present on the mobile device 102 is updated to become a new image. When an image update occurs, the differences between the binary image 118 on the mobile device 102 and the new image that is to be transferred to the mobile device 102 are referred to as the image delta (e.g., the amount of change) between the two images. Examples of such problems are discussed below in reference to Figs. 2A-2D and Figs. 4A-4D.

Turning now to Fig. 2A-2D, memory blocks containing the binary image 118 are depicted according to some embodiments of the present disclosure. In Fig. 2A, the binary image 118 is stored in base firmware 202, and includes a phone component 204, a web browser component 206, and a media player component 208. The phone component 204, the web browser component 206, and the media player component 208 are illustrative examples only, as the binary image 118 can be composed of any types of binary components. For example, the binary image may also be composed of components for a phone book, messaging, a calendar, and games. The base firmware 202 is developed in the image creation system 104. The components 204, 206, and 208 are depicted for purposes of illustration only, as any combination or organization of instructions and data may be provided. As illustrated, each component 204, 206, and 208 of the binary image 118 abuts the next component.

In Fig. 2B, the binary image 118 is stored in flash memory 210, and includes the phone component 204, the web browser component 206, the media player component 208, and mobile device available memory 212. The mobile device available memory 212 is memory that is reserved in the flash memory 210 for future expansion of the components 204-208 in the binary image 118. The components 204 - 208 in Fig. 2B appear smaller than the components 204-208 in Fig. 2A because the mobile FOTA engine 114 compresses components in the flash memory 210 to minimize the amount of memory required to store the binary image 118 in the mobile device 102.

Because the binary image 118 is a fixed binary representation of the instructions and data, the location of each component 204-208 is static once the binary image 118 is stored in the flash memory 210. The static nature of each location makes providing incremental updates to the binary image 118 difficult, because if any component other than the media player component 208 is expanded, there is no available memory in which the update can be stored contiguously with the portion being updated.

For example, the phone component 204 is associated with a fixed location when the binary image 118 is provided. However, an update to the binary image 118 may result in an expansion of the phone component 204 beyond the location where the phone component 204 previously ended, overlapping into the location where the beginning of web browser component 206 is stored. Overwriting a portion of the expanded phone component 204 over the web browser component 206 may result in corrupting the web browser component 206. The expansion of the phone component 204 into the location occupied by the web browser component 206 requires that the web browser component 206 be written again in its entirety at a new location beyond the end location of the expanded phone component 204. However, shifting the beginning location of the web browser component 206 also results in shifting the ending location of the web browser component 206 into the location occupied by the media player component 208. Therefore, the expansion of the phone component 204 can result in the shifting of not only the web browser component 206, but also the shifting of the media player component 208, and every other component in the flash memory 210 that is stored contiguously after the phone component 204. Accordingly, this problem in propagating changes throughout the binary image 118 while performing incremental updates may cause serious problems in the operation of the mobile device 102.

In Fig. 2C, the binary image 118 is stored in flash memory 210, and includes the phone component 204, the web browser component 206, the media player component 208, phone available memory 214, web browser available memory 216, and media player available memory 218. When loaded in the flash memory 210, the binary image 118 is broken into various portions (e.g., the components 204, 206, and 208) and each portion is assigned a block of available memory (e.g., the available memories 214, 216, and 218). For example, there is a phone available memory 214 that is contiguous to and follows the phone component 204. The mobile device available memory 212 from Fig. 2B is divided into three smaller portions of memory, the phone available memory 214, the web browser available memory 216, and the media player available memory 218. The available memory portions allow for some expansion of the components 204, 206, and 208 without the need to rewrite the entire binary image 118.

This solution of putting available memory between components may be feasible in some situations, but may not necessarily solve all the propagation problems in other situations, such as when the update requires more available memory for a component than has been reserved for the component. For example, some available memory may overflow relatively quickly due to updates and bug fixes, which can result in having to rewrite almost the entire binary image 118 in the flash memory 210 even when only a small amount of the binary image 118 is updated. Often, there may be little flexibility available for the software represented by the binary image 118. The binary image 118 is created using the image creation system 104 outside of the mobile device 102 and then transferred to the mobile device 102 when the binary image 118 is complete. Because of the relatively simple operating system in the mobile device 102 and the use of the binary image 118, updates such as additional features and bug fixes may require that the entire binary image 118 be modified and transferred to the mobile device 102. This is often impractical for a number of reasons. Not only is it impractical to utilize a customer's bandwidth for a lengthy period of time, but governmental regulations may limit the amount of time that an update may take. For example, governmentally mandated 911 restrictions may require that an update take no more than five minutes. As such, updating large portions of an existing binary image 118 on the mobile device 102 is often unfeasible.

Embodiments of the present disclosure address these updating problems by partitioning components into smaller modules, such that the modules may fit in only one logical block in the flash memory 210. If the mobile FOTA engine 114 compresses the phone component 204 to a size that is larger than one logical block, the phone component 204 must be stored in more than one logical block. Storing the phone component 204 in more than one logical block means that if even a small part of the phone component 204 is subsequently modified, then each of the multiple logical blocks that store the phone component 204 must be updated. Updating multiple logical blocks requires more update time and consumes more processing resources than updating a single logical block.

Therefore, components that are compressed to a size that is larger than a logical block can be partitioned into smaller modules that may be smaller than a logical block. For example, when the mobile FOTA engine 114 compresses the phone component 204 for the flash memory 210, the phone component 204 is larger than 16k, or one logical block. Therefore, the phone component 204 is partitioned into modules, such as a phone code module 220 and a phone data module 222 depicted in Fig. 2A. The phone code module 220 and the phone data module 222 are depicted as examples only, as the phone component 204 can be partitioned into other modules as well, and any component can be partitioned into modules.

In Fig. 2D, the binary image 118 is stored in flash memory 210, and includes the web browser component 206, the media player component 208, the web browser available memory 216, the media player available memory 218, the phone code module 220, the phone data module 222, code available memory 224, and data available memory 226. Because the phone code module 220 and its code available memory 224 are smaller than the phone component 204, the phone code module 220 and its code available memory 224 can both be written in only one logical block. Likewise, because the phone data module 222 and its data available memory 226 are smaller than the phone component 204, the phone data module 222 and its data available memory 226 can both be written in only one logical block. Any subsequent modification to the phone component 204 that affects only the phone code module 220 requires only updating the logical block in the flash memory 210 that stores the phone code module 220, and does not require updating the logical block in the flash memory 210 that stores the phone data module 222. Updating fewer logical blocks in the flash memory 210 requires less updating time and consumes less processing resources.

A memory layout is generated to define each corresponding unique address for each component and each module. For example, in the base firmware 202 the phone code module 220 is stored from a base address 228 to a base address 230 and the phone data module 222 is stored from the base address 230 to a base address 232. Likewise, the web browser component 206 is stored from the base address 232 to a base address 234 and the media component 208 is stored from the base address 234 to a base address 236. Because the phone code module 220 is stored from the base address 228 to the base address 230, the length of the phone code module 220 is a length 238. Likewise, the length of the phone data module 222 is a length 240, the length of the web browser component 206 is a length 242, and the length of the media player component 208 is a length 244. In another example, the phone code module 220 is allocated a length 246 of flash memory 210 at a flash address 248, the phone data module 222 is allocated a length 250 of flash memory 210 at a flash address 252, the web browser component 206 is allocated a length 254 of flash memory 210 at a flash address 256, and the media player component 208 is allocated a length 258 of flash memory at a flash address 260.

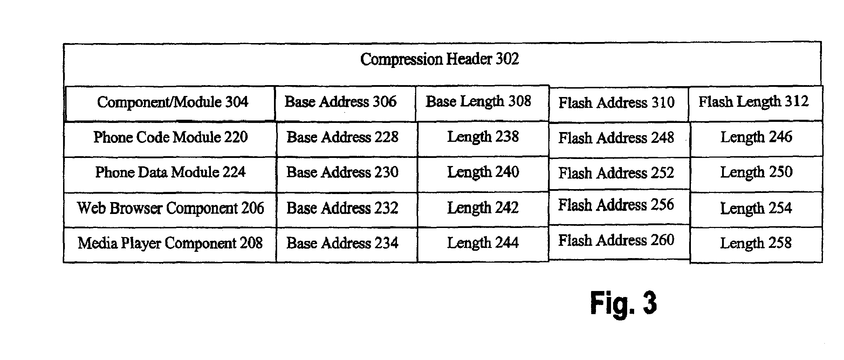

Fig. 3 shows a compression header according to embodiments of the present disclosure. When the mobile FOTA engine 114 compresses the binary image 118 for the flash memory 210, the mobile FOTA engine 114 generates a compression header 302 to function as a memory layout. The compression header 302 defines each corresponding unique address for each component and each module. When the mobile FOTA engine 114 compresses each component and loads each component in the flash memory 210, the compression header 302 includes data to identify the component from the base firmware 202 and to identify where each component is loaded in the flash memory 210. The compression header 320 includes a component/module 304 column, a base address 306 column, a base length 308 column, a flash address 310 column, and a flash length 312 column. For example, the phone code module 220 is listed in the compression header 302 with the base address 228 and the length 238 in the base firmware 202, and allocated the length 246 in the flash memory 210 at the flash address 248. Any component or module can be located in the base firmware 202 by referencing the corresponding base address 306 for the component or module. Furthermore, any component or module can be retrieved in its entirety from the base firmware 202 by referencing the corresponding base address 306 and the corresponding base length 308 for the component or module. Likewise, any component or module can be located in the flash memory 210 by referencing the corresponding flash address 310 for the component or module. Similarly, the amount of flash memory 210 allocated for any component or module can be determined by referencing the corresponding base length 308 for the component or module.

The columns 304-312 in the compression header 302 are depicted as examples only, as the compression header 302 can include any number and types of columns. Although the modules and components listed in the compression header 302 are listed in the same order that the modules and components are stored in the base firmware and the same order that the modules and components are stored in the flash memory 210, the use of the compression header 302 creates a flexibility that enables the modules and components to be stored in any order. This flexibility enables more efficient storing of components and modules, as is discussed below in an example described for Fig. 4D.

Figs. 4A-4D show various embodiments of memory blocks containing an image according to embodiments of the present disclosure. In Fig. 4A, the binary image 118 is stored in original base firmware 402, and includes the phone component 204, the web browser component 206, and the media player component 208. The original base firmware 202 is developed in the image creation system 104. The components 204, 206, and 208 are depicted for purposes of illustration only, as any combination or organization of instructions and data may be provided. As illustrated, each component 204, 206, and 208 of the binary image 118 abuts the next component.

In Fig. 4B, the binary image 118 is stored in the base firmware 202, and includes the phone component 204, the web browser component 206, the media player component 208, and a phone delta 404. The phone delta 404 is the difference between the original binary image in the original base firmware 402 and the new image in the base firmware 202 that is to be transferred to the mobile device 102. For this example, the web browser component 206 and the media player component 208 are unchanged from the original base firmware 402 to the base firmware 202.

However, because the phone component 204 changed from the original base firmware 402 to the base firmware 202, the image creation system 104 identifies and collects these changes in the phone delta 404. Because the phone delta 404 includes all of the changes between the original binary image and the binary image 118 that is to be transferred to the mobile device 102, the image creation system 104 can transfer only the phone delta 404 to the mobile device 102 to update the image in the mobile device 102. Therefore, the image creation system 104 does not need to transfer the entire binary image 118 to the mobile device or even the entire modified phone component 204 to the mobile device 102. By transferring only the phone delta 404, the image creation system 104 does not utilize a customer's bandwidth for a lengthy period of time that would be required to transfer the entire original binary image or even the period of time required to transfer the modified phone component 204. One process by which the size of the image delta may be minimized is described in greater detail in U.S. Patent Application Serial No. 2006125264, and entitled "System and Method for a Patch Minimization Tool," which is incorporated by reference for all purposes.

In Fig. 4C, the binary image 118 is stored in flash memory 210, and includes the phone component 204, the web browser component 206, the media player component 208, the phone available memory 214, the web browser available memory 216, and the media player available memory 218. When loaded in the flash memory 210, the binary image 118 is broken into various portions (e.g., the components 204, 206, and 208) and each portion is assigned a block of available memory (e.g., the available memories 214, 216, and 218). For example, the phone available memory 214 is contiguous to and follows the phone component 204. The components 204 - 208 in Fig. 4C appear smaller than the components 204-208 in Fig. 4B because the mobile FOTA engine 114 compresses components in the flash memory 210 to minimize the amount of memory required to store the binary image 118 in the mobile device 102. The available memory portions allow for some expansion of the components 204, 206, and 208 without the need to recreate the entire binary image 118.

This solution of putting available memory between components may be feasible in some situations, but may not solve the propagation problem in other situations when the update requires more available memory for a component than has been reserved for the component. For example, updates to the phone component 204 can cause the expanded phone component 204 to overflow the phone available memory 214. Even if the expanded phone component 204 only overflows the phone available memory 214 by a very small amount of memory, the expanded phone component may need to be stored in a different location from where the phone component 204 and the phone available memory 214 were stored, leaving a large memory gap in the flash memory 210 where the phone component 204 and the phone available memory 214 were stored. Such a memory gap runs counter to the compression efforts to provide the user of the mobile device 102 with access to greater amounts of memory for storing data such as voice messages, text messages, e-mails, and contacts.

Alternatively, if part of the expanded phone component 204 is stored where the phone component 204 and the phone available memory 214 were stored, the remainder of the expanded phone component 204 must be stored elsewhere. This fractured storage results in the requirement for both the main portion of the expanded phone component 204 and the remainder of the expanded phone component 204 to be separately retrieved and combined when the expanded phone component 204 is to be executed. This requirement adds greater retrieval time and the time to combine the portions to the process of using the expanded phone component 204, thereby delaying user response and diminishing user satisfaction with the mobile device 102.

Embodiments of the present disclosure address these updating problems by using the compression header 302 to partition expanded components into smaller modules, such that the resulting modules may fit in previously allocated memory in the flash memory 210. For example, the mobile FOTA engine 114 compresses an expanded web browser component 206 to a size, and compares the size to the length 254 of flash memory allocated for the web browser component 206 and the web browser available memory 216, as specified in the compression header 302. If the compression header 302 indicates that the expanded web browser 206 can be entirely stored in the length 254 of the flash memory 210, the mobile FOTA engine 114 loads the expanded web browser 206 at the flash address 256, as specified in the compression header 302.

However, a component that is compressed to a size that is larger than its allocated memory space can be partitioned into smaller modules, whereby at least one of the modules may be smaller than the allocated memory space. For example, when the mobile FOTA engine 114 compresses the expanded phone component 204 for the flash memory 210, the expanded phone component 204 is larger than a length 406 in the flash memory 210 allocated for the phone component 204 and the phone available memory 214. Therefore, the phone component 204 is partitioned into modules, such as the phone code module 220 and the phone data module 222 depicted in Fig. 4A. The phone code module 220 and the phone data module 222 are depicted as examples only, as the phone component 204 can be partitioned into other modules as well, and any component can be partitioned into modules.

In Fig. 4D, the binary image 118 is stored in flash memory 210, and includes the web browser component 206, the media player component 208, the web browser available memory 216, the media player available memory 218, the phone code module 220, the phone data module 222, the code available memory 224, and the data available memory 226. Because the phone code module 220 and its code available memory 224 are smaller than the expanded phone component 204, the phone code module 220 and its code available memory 224 can both be written to the length 406 of the flash memory 210 allocated for the phone component 204 and the phone available memory 214. The phone data module 222 and its data available memory 226 do not need to be stored contiguous to the phone code module 220 or the code available memory 224. Therefore, the phone data module 222 and its data available memory 226 can be stored elsewhere in the flash memory 210, with a flash address 408 and a length 410 allocated for the phone data module 222 recorded in the compression header 302. Using the compression header 302 enables the modules and components to be stored in the flash memory 210 in a different order than the modules and components were stored in the base firmware 202.

Consequently, the available memory space for the phone component 204 and the phone available memory 214 do not become a large memory gap when the expanded phone component 204 becomes larger than the length 406 of flash memory 210 allocated for the phone component 204 and its phone available memory 214. Furthermore, any subsequent modification to the phone component 204 that affects only the phone code module 220 requires only updating the phone code module 220, and does not require updating the phone data module 222. Updating fewer modules in the flash memory 210 requires less updating time and consumes less processing resources.

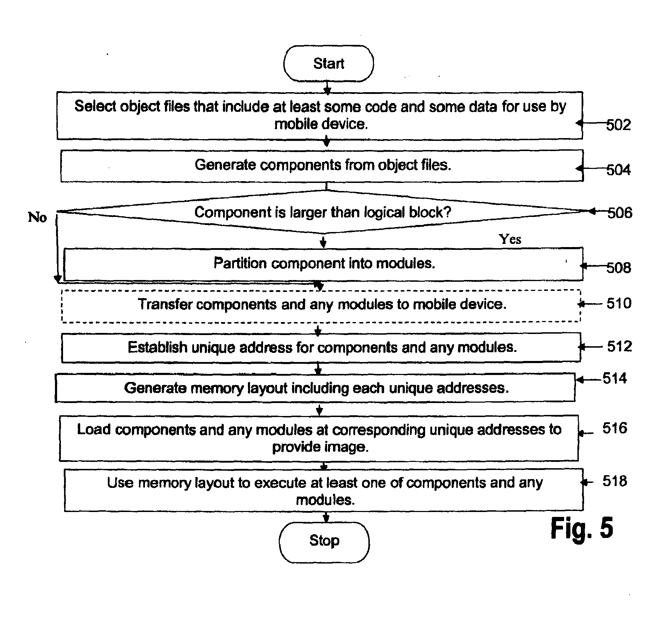

Turning now to Fig. 5 a flowchart of a method for providing an image for use in a mobile device is depicted according to an embodiment of the present disclosure. Executing the method enables the image creation system 104 to provide the binary image 118 to the mobile device 102.

In box 502, the image creation system selects object files that include at least some code and some data for use by the mobile device. For example, a user of the image creation system 104 enters data to identify the object files 120 to be used to provide the binary image 118 for the mobile device 102. The identified object files 120 can include object files for the phone component 204, the web browser component 206, and the media player component 208, which are illustrative examples only, as the object files 120 can include any types of components, such as components for a phone book, messaging, a calendar, and games.

In box 504, the image creation system generates components from the object files 120. For example, the image creation system 104 generates the phone component 204, the web browser component 206, and the media player component 208 from the object files 120, wherein the object files 120 are provided in machine language. Each component may be a collection of modules, where each module is a relocatable object, and the collection may be predefined, such as an archive. For example, an archive, which can have a name of *.a or *.lib, may be a library that includes multiple modules, and the library itself may be identified as a component. Components may be based on user provided definitions, default definitions, or a combination of user provided and default definitions. For example, a default definition may define a component as a collection of related modules, such as a single library or other defined collection, with any non-library files combined into a single component. Accordingly, if there are two libraries and multiple non-library files, there would be three components. The user of the image creation system 104 can provide a component definition that may override any applicable default definition. For example, the user may combine multiple libraries into a single component, divide a library into multiple components, etc. It is understood that user-defined and default definitions may be mixed, with a user defining certain components and allowing other components to be defined according to the default definitions.

In box 506, the image creation system determines whether a component is larger than a logical block. For example, the image creation system 104 determines whether the phone component 204 is larger than the 16k logical block in the flash memory 210. If the image creation system 104 determines that the phone component 204 is larger than 16k of memory, the method continues to block 508. If the image creation system 104 determines that the phone component 204 is not larger than 16k of memory, the method proceeds to block 510.

In box 508, the image creation system partitions the component into modules. For example, the image creation system 104 partitions the corresponding object files 120 for the phone component 204 to generate the phone code module 220 and the phone data module 222. The object files 120 enables a user to partition portions of the binary image 118 into a number of separate code and data regions spread throughout a memory's address map. The processor 182 partitions components, such as the phone component 204, to generate modules, such as the phone code module 220, based on the partitioned object files 120. The processor 182 may call another process to partition the object files 120 into components. One such process for partitioning the object files is described in greater detail in U.S. Patent Application Serial No._____ (not yet published) and entitled "System and Method for a Pseudo DLL Linker," which is incorporated by reference for all purposes.

In box 510, the image creation system transfers the components and any modules to the mobile device. For example, the image creation system 104 transfers the web browser component 206, the media player component 208, the phone code module 220, and the phone data module 222 to the mobile device 102.

In box 512, the mobile FOTA engine 114 establishes a unique address for the components and any modules. For example, the mobile FOTA engine 114 establishes the flash address 248 for the phone code module 220. The address may be determined by examining an existing memory structure and any files that manage loading of files, components, or modules in a particular memory space. Each address may be selected to minimize the amount of change that a future update may cause. For example, a component that will likely require frequent updates may be given an address that will allow it to have more room for update expansion than a component that is rarely updated. The address determination defines the ranges of addresses that are available in the hardware for the components. For example, if a certain amount of memory is to be reserved for future updates, the range of addresses may be defined so as to make the reserved memory off limits for storing other components.

In box 514, the mobile FOTA engine 114 generates a memory layout including each unique address. For example, the mobile FOTA engine 114 generates the compression header 302 including the unique addresses for the phone code module 220, the phone data module 224, the web browser component 206, and the media player component 208.

In box 516, the mobile FOTA engine 114 loads the components and any modules at corresponding unique addresses to provide the binary image. For example, the mobile FOTA engine 114 loads the phone code module 220 at the flash address 248.

In box 518, the mobile FOTA engine 114 uses a memory layout to execute one or more of the components and/or any modules. For example, the mobile FOTA engine 114 uses the compression header 302 to locate the phone code module 220 at the flash address 248, retrieve the phone code module 220, decompress the phone code module 220, and execute the phone code module 220.

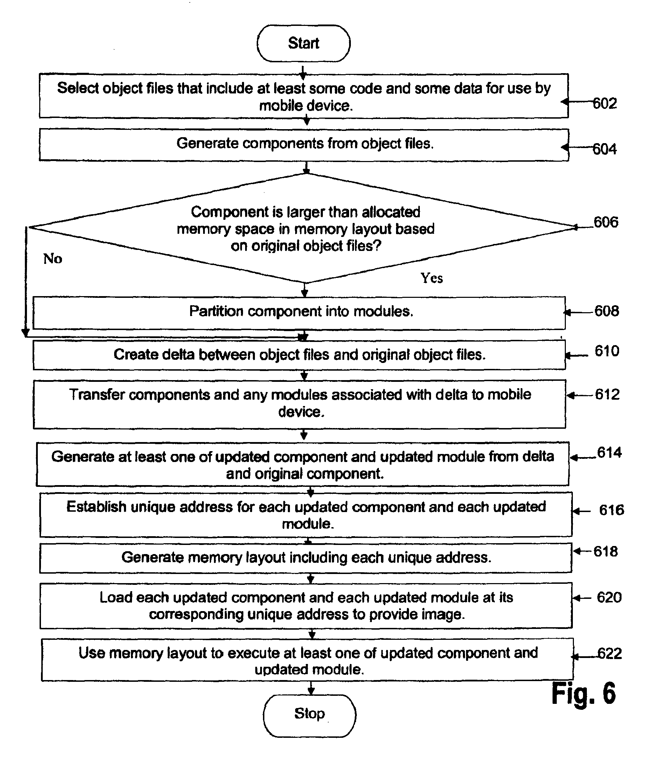

Turning now to Fig. 6 a flowchart of a method for updating an image for use in a mobile device is depicted according to an embodiment of the present disclosure. Executing the method enables the image creation system 104 to update the binary image 118 on the mobile device 102.

In box 602, the image creation system selects object files that include at least some code and some data for use by the mobile device. For example, the user of the image creation system 104 enters data to identify the object files 120 to be used to update the binary image 118 on the mobile device 102. The identified object files 120 can include object files for the phone component 204, the web browser component 206, and the media player component 208.

In box 604, the image creation system generates components from the object files. For example, the image creation system 104 generates the phone component 204, the web browser component 206, and the media player component 208 from the object files 120, wherein the object files 120 may be provided in machine language.

In box 606, the image creation system determines whether a component is larger than an allocated memory space in a memory layout based on the original object files. For example, the image creation system 104 determines whether the phone component 204 is larger than the length 406 of the flash memory 210 originally allocated for the phone component 204 and its phone available memory 214, as specified by the original compression header. If the image creation system 104 determines that the component is not larger than the allocated memory space specified by the original compression header, the method proceeds to block 610. If the image creation system 104 determines that the component is larger than the allocated memory space specified by the original compression header, the method continues to block 608.

In box 608, the image creation system partitions the component into modules. For example, the image creation system 104 partitions the corresponding object files 120 for the phone component 204 to generate the phone code module 220 and the phone data module 222.

In box 610, the image creation system creates a delta between the object files and original object files. For example, the image creation system 104 references the base address 306 and the base length 308 in the original compression header to compare the original components and the original modules in the original base firmware 402 with the new components and the new modules in the base firmware 202. This comparison can create a delta between the original object files and the object files 120 that specifies that the only changes to the components and the modules are changes to the phone component 204, changes that are identified as the phone delta 404.

In box 612, the image creation system transfers components and any modules associated with the delta to the mobile device 102. For example, the image creation system 104 transfers the phone delta 404 to the mobile device 102.

In box 614, the mobile FOTA engine 114 generates at least one of an updated component and an updated module from the delta and the original component. For example, the mobile FOTA engine 114 generates an updated phone code module 220 from the phone delta 404 and an original phone code module.

In box 616, the mobile FOTA engine 114 establishes a unique address for each updated component and each updated module. For example, the mobile FOTA engine 114 establishes the flash address 248 for the updated phone code module 220.

In box 618, the mobile FOTA engine 114 generates a memory layout including each unique address. For example, the mobile FOTA engine 114 generates the compression header 302 including the unique addresses for the phone code module 220, the phone data module 224, the web browser component 206, and the media player component 208.

In box 620, the mobile FOTA engine 114 loads each updated component and each updated module at its corresponding unique address to update the binary image. For example, the mobile FOTA engine 114 loads the updated phone code module 220 at the flash address 248 to update the binary image 118.

In box 622, the mobile FOTA engine 114 uses a memory layout to execute one or more of the updated component and the updated module. For example, the mobile FOTA engine 114 uses the compression header 302 to locate the updated phone code module 220 at the flash address 248, retrieve the updated phone code module 220, decompress the updated phone code module 220, and execute the updated phone code module 220.

Fig. 7 shows a wireless communications system including the mobile device 102. Fig. 7 depicts the mobile device 102, which is operable for implementing aspects of the present disclosure, but the present disclosure should not be limited to these implementations. Though illustrated as a mobile phone, the mobile device 102 may take various forms including a wireless mobile device, a pager, a personal digital assistant (PDA), a portable computer, a tablet computer, a laptop computer, a digital camera, a digital music player, a digital calculator, and an electronic key fob for keyless entry. Many suitable mobile devices combine some or all of these functions. In some embodiments of the present disclosure, the mobile device 102 is not a general-purpose computing device like a notebook or tablet computer, but rather is a special-purpose communications device such as a mobile phone, pager, or PDA.

The mobile device 102 includes a display 702 and a touch-sensitive surface or keys 704 for input by a user. The mobile device 102 may present options for the user to select, controls for the user to actuate, and/or cursors or other indicators for the user to direct. The mobile device 102 may further accept data entry from the user, including numbers to dial or various parameter values for configuring the operation of the mobile device. The mobile device 102 may further execute one or more software or firmware applications in response to user commands. These applications may configure the mobile device 102 to perform various customized functions in response to user interaction.

Among the various applications executable by the mobile device 102 are a web browser, which enables the display 702 to show a web page. The web page is obtained via wireless communications with a cell tower 706, a wireless network access node, or another wireless communications network or system. The cell tower 706 (or wireless network access node) is coupled to the telecommunication network 106, such as the Internet. Via the wireless link and the wired network, the mobile device 102 has access to information on various servers, such as a content server 708. The content server 708 may provide content that may be shown on the display 702.

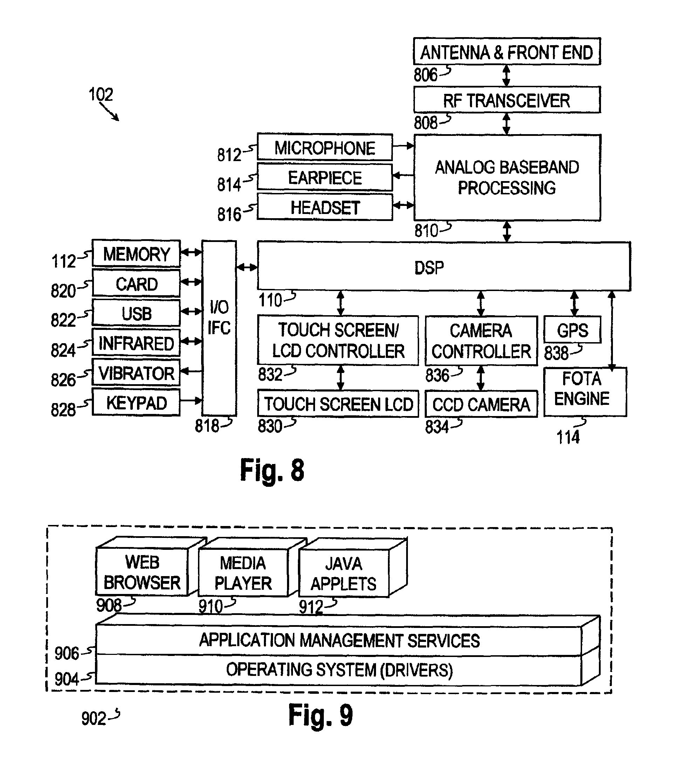

Fig. 8 shows a block diagram of the mobile device 102. The mobile device 102 includes the DSP 110 and the memory 112. As shown, the mobile device 102 may further include an antenna and front end unit 806, a radio frequency (RF) transceiver 808, an analog baseband processing unit 810, a microphone 812, an earpiece speaker 814, a headset port 816, an input/output interface 818, a removable memory card 820, a universal serial bus (USB) port 822, an infrared port 824, a vibrator 826, a keypad 828, a touch screen liquid crystal display (LCD) with a touch sensitive surface 830, a touch screen/LCD controller 832, a charge-coupled device (CCD) camera 834, a camera controller 836, a global positioning system (GPS) sensor 838, and the mobile FOTA engine 114.

The DSP 110 or some other form of controller or central processing unit operates to control the various components of the mobile device 102 in accordance with embedded software or firmware stored in the memory 112. In addition to the embedded software or firmware, the DSP 110 may execute other applications stored in the memory 112 or made available via information carrier media such as portable data storage media like the removable memory card 820 or via wired or wireless network communications. The application software may comprise a compiled set of machine-readable instructions that configure the DSP 110 to provide the desired functionality, or the application software may be high-level software instructions to be processed by an interpreter or compiler to indirectly configure the DSP 110.

The antenna and front end unit 806 may be provided to convert between wireless signals and electrical signals, enabling the mobile device 102 to send and receive information from a cellular network or some other available wireless communications network. The RF transceiver 808 provides frequency shifting, converting received RF signals to baseband and converting baseband transmit signals to RF. The analog baseband processing unit 810 may provide channel equalization and signal demodulation to extract information from received signals, may modulate information to create transmit signals, and may provide analog filtering for audio signals. To that end, the analog baseband processing unit 810 may have ports for connecting to the built-in microphone 812 and the earpiece speaker 814 that enable the mobile device 102 to be used as a cell phone. The analog baseband processing unit 810 may further include a port for connecting to a headset or other hands-free microphone and speaker configuration.

The DSP 110 may send and receive digital communications with a wireless network via the analog baseband processing unit 810. In some embodiments, these digital communications may provide Internet connectivity, enabling a user to gain access to content on the Internet and to send and receive e-mail or text messages. The input/output interface 818 interconnects the DSP 110 and various memories and interfaces. The memory 112 and the removable memory card 820 may provide software and data to configure the operation of the DSP 110. Among the interfaces may be the USB interface 822 and the infrared port 824. The USB interface 822 may enable the mobile device 102 to function as a peripheral device to exchange information with a personal computer or other computer system. The infrared port 824 and other optional ports such as a Bluetooth interface or an IEEE 802.11 compliant wireless interface may enable the mobile device 102 to communicate wirelessly with other nearby mobile devices and/or wireless base stations.

The input/output interface 818 may further connect the DSP 110 to the vibrator 826 that, when triggered, causes the mobile device 102 to vibrate. The vibrator 826 may serve as a mechanism for silently alerting the user to any of various events such as an incoming call, a new text message, and an appointment reminder.

The keypad 828 couples to the DSP 110 via the interface 818 to provide one mechanism for the user to make selections, enter information, and otherwise provide input to the mobile device 102. Another input mechanism may be the touch screen LCD 830, which may also display text and/or graphics to the user. The touch screen LCD controller 832 couples the DSP 110 to the touch screen LCD 830.

The CCD camera 834 enables the mobile device 102 to take digital pictures. The DSP 110 communicates with the CCD camera 834 via the camera controller 836. The GPS sensor 838 is coupled to the DSP 110 to decode global positioning system signals, thereby enabling the mobile device 102 to determine its position. In some embodiments, the mobile FOTA engine 114 might be a firmware component, a hardware component, or a combination of software, firmware, and/or hardware. Various other peripherals may also be included to provide additional functions, e.g., radio and television reception.

Fig. 9 illustrates a software environment 902 that may be implemented by the DSP 110. The DSP 110 executes operating system drivers 904 that provide a platform from which the rest of the software operates. The operating system drivers 904 provide drivers for the mobile device hardware with standardized interfaces that are accessible to application software. The operating system drivers 904 include application management services ("AMS") 906 that transfer control between applications running on the mobile device 102. Also shown in Fig. 9 are a web browser application 908, a media player application 910, and Java applets 912. The web browser application 908 configures the mobile device 102 to operate as a web browser, allowing a user to enter information into forms and select links to retrieve and view web pages. The media player application 910 configures the mobile device 102 to retrieve and play audio or audiovisual media. The Java applets 912 configure the mobile device 102 to provide games, utilities, and other functionality.

The image creation system 104 may be implemented on any general-purpose computer with sufficient processing power, memory resources, and network throughput capability to handle the necessary workload placed upon it. Fig. 10 illustrates a typical, general-purpose computer system suitable for implementing one or more embodiments disclosed herein. The image creation system 104 includes a processor 982 (which may be referred to as a central processor unit or CPU) that is in communication with memory devices including secondary storage 984, read only memory (ROM) 986, random access memory (RAM) 988, input/output (I/O) 990 devices, network connectivity devices 992, and the object files 120. The processor 982 may be implemented as one or more CPU chips.

The secondary storage 984 is typically comprised of one or more disk drives or tape drives and is used for non-volatile storage of data and as an overflow data storage device if the RAM 988 is not large enough to hold all working data. The secondary storage 984 may be used to store the object files 120 and programs that are loaded into the RAM 988 when such programs are selected for execution. The ROM 986 is used to store instructions and perhaps data that are read during program execution. The ROM 986 is a non-volatile memory device that typically has a small memory capacity relative to the larger memory capacity of secondary storage. The RAM 988 is used to store volatile data and perhaps to store instructions. Access to both the ROM 986 and the RAM 988 is typically faster than to the secondary storage 984.

The I/O 990 devices may include printers, video monitors, liquid crystal displays (LCDs), touch screen displays, keyboards, keypads, switches, dials, mice, track balls, voice recognizers, card readers, paper tape readers, or other well-known input devices. The network connectivity devices 992 may take the form of modems, modem banks, ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) and/or global system for mobile communications (GSM) radio transceiver cards, and other well-known network devices. These network connectivity 992 devices may enable the processor 982 to communicate with an Internet or one or more intranets. With such a network connection, it is contemplated that the processor 982 might receive information from the network, or might output information to the network in the course of performing the above-described method steps, including information such as the image 116, which is based on the object files 120. Such information, which is often represented as a sequence of instructions to be executed using the processor 982, may be received from and outputted to the network, for example, in the form of a computer data signal embodied in a carrier wave.

Such information, which may include data or instructions to be executed using the processor 982 for example, may be received from and outputted to the network, for example, in the form of a computer data baseband signal or signal embodied in a carrier wave. The baseband signal or signal embodied in the carrier wave generated by the network connectivity 992 devices may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods well known to one skilled in the art.

The processor 982 executes instructions, codes, computer programs, scripts that it accesses from hard disk, floppy disk, optical disk (these various disk based systems may all be considered the secondary storage 984), the ROM 986, the RAM 988, or the network connectivity devices 992.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

## Claims

1. A method for updating an image for use in a mobile device, comprising:
selecting object files that include at least some code and some data for use by the mobile device;
generating components from the object files;
determining whether a selected one of the components is larger than an allocated memory space in a memory layout based on original object files;
partitioning the selected component into modules in response to determining that the selected component is larger than the allocated memory space;
creating a delta between the object files and an original object files;
generating at least one of an updated component and an updated module from the delta and an original component;
establishing a unique address for each updated component and each updated module;
generating an updated memory layout including each unique address; and
loading each updated component and each updated module at its corresponding unique address to provide an updated image.

2. The method of claim 1, wherein the object files are provided in machine language and ting the delta between the object files and the original object files comprises analyzing machine language code.

3. The method of claims 1 or 2, wherein generating the components comprises modifying at least one of the original object files.

4. The method of one of claims 1 to 3, further comprising identifying which of a plurality of original components that generated an original image have been changed in the updated image based on the delta.

5. The method of one of claims 1 to 4, further comprising transferring components and any modules associated with the delta to the mobile device.

6. The method of claim 5, wherein transferring components and any modules associated with the delta to the mobile device comprises transferring only the components and any modules that differ from corresponding original components and any corresponding original modules.

7. The method of claim 5, wherein transferring components and any modules associated with the delta to the mobile device comprises transferring the components and any modules to the mobile device using a firmware over the air process.

8. The method of claim 5, wherein transferring components and any modules associated with the delta to the mobile device comprises transferring the components and any modules to the mobile device via a wireless interface.

9. A system for providing an image for use in a mobile device, comprising:
an image creation system comprising a processor programmed to select object files that include at least some code and some data for use by the mobile device, the processor further programmed to generate components from the object files, and to determine whether a selected one of the components is larger than a logical block, and to partition the selected component into modules in response to determining that the selected component is larger than the logical block; and
a mobile device comprising a processor and a firmware-over-the-air engine, the firmware-over-the-air engine when executed by the processor on the mobile device is programmed to establish unique addresses for at least some of the components and any modules of the selected component, to generate a memory layout including the unique addresses, and to load the components and any module at the corresponding unique addresses to provide the image.

10. The system of claim 9, wherein the object files are provided in machine language and the image creation system calls a program to partition the selected component into the modules.

11. The system of claims 9 or 10, further comprising means for transferring the components and any modules to the wireless device.

12. The system of one of claims 9 to 11, wherein the selected component is an application for use by the mobile device.

13. The system of one of claims 9 to 12, wherein generating the components from the object files comprises grouping the modules to generate the selected component.

14. The system of claim 13, wherein grouping the modules to generate the selected component is based on a predefined set of component definitions.

15. The system of one of claims 9 to 14, wherein establishing unique addresses comprises taking into account a flash memory boundary of a memory for storing the image.
